(19) **Europäisches Patentamt**

**European Patent Office**

**Office européen des brevets**

(11) **EP 1 101 351 B1**

(12) **EUROPÄISCHE PATENTSCHRIFT**

(45) Veröffentlichungstag und Bekanntmachung des Hinweises auf die Patenterteilung:
**14.01.2004 Patentblatt 2004/03**

(51) Int Cl.$^7$: **H04N 1/10**, H04N 1/191, G02B 26/10

(21) Anmeldenummer: **99931111.1**

(22) Anmeldetag: **19.06.1999**

(86) Internationale Anmeldenummer:
**PCT/EP1999/004264**

(87) Internationale Veröffentlichungsnummer:
**WO 2000/002376 (13.01.2000 Gazette 2000/02)**

(54) **SCANNERKOPF ZUR ABTASTUNG VON VORLAGEN**

SCANNING HEAD FOR SCANNING DOCUMENTS

TETE DE SCANNEUR POUR LE BALAYAGE DE DOCUMENTS

(84) Benannte Vertragsstaaten:
**AT BE CH CY DE DK ES FI FR GB GR IE IT LI LU MC NL PT SE**

(30) Priorität: **03.07.1998 DE 19829776**

(43) Veröffentlichungstag der Anmeldung:
**23.05.2001 Patentblatt 2001/21**

(73) Patentinhaber: **Datasound Gesellschaft zur Entwicklung und Vermarktung Digitaler Audio- und Informationssysteme mbH 67061 Ludwigshafen (DE)**

(72) Erfinder: **KRÜGER, Tilmann D-67112 Mutterstadt (DE)**

(74) Vertreter: **Isenbruck, Günter, Dr. et al Isenbruck, Bösl, Hörschler, Wichmann, Huhn, Patentanwälte Theodor-Heuss-Anlage 12 68165 Mannheim (DE)**

(56) Entgegenhaltungen:
**EP-A- 0 164 713          EP-A- 0 468 508
DE-A- 3 216 736**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft eine Vorrichtung, mit der es möglich ist, eine Vorlage optisch abzutasten, um ein datentechnisches Abbild der Vorlage bezüglich Helligkeit oder Farbe erstellen zu können.

Vorrichtungen zur optischen Abtastung von Vorlagen zur Umsetzung in elektronische Signale werden in sogenannten Scannern verwendet, beispielsweise in sogenannten Laserscannern zur Barcodeerfassung, wie sie in Kassen zur Erfassung von Artikelnummern verwendet werden, in Durchzugscannern, wie sie bei Faxgeräten üblich sind, in Handscannern und Flachbettscannern, wie sie zur Aufnahme der Vorlage und zur Ablage eines datentechnischen Abbildes der Vorlage in Rechnern zur Weiterverarbeitung von Bildern, Zeichnungen oder Texten der Vorlage Verwendung finden. Vorrichtungen zur optischen Abtastung von Vorlagen werden auch in Fotokopiergeräten zur Abbildung der gesamten Vorlage auf eine photosensitive Trommel verwendet.

Entsprechend der Vielzahl technischer Ausgestaltungen von Scannern gibt es eine Reihe von gebräuchlichen Verfahren zur Abtastung der Vorlage. Zwei Grundprinzipien werden dabei überwiegend verwendet; nämlich erstens die Abtastung der Vorlage mittels eines gebündelten Lichtstrahles, vorzugsweise in Form von Laserscannern, wo der Lichtstrahl meist durch einen rotierenden Polygonspiegel so abgelenkt wird, daß er den abzutastenden Bereich überstreicht, und zweitens die optische Aufnahme der Vorlage durch eine Kamera, derzeit vorzugsweise eine CCD-Kamera. Lösungen, die das zweite Grundprinzip realisieren, lassen sich in zwei Gruppen einteilen, von denen die erste dadurch gekennzeichnet ist, daß in einer elektronischen Videokamera über eine Optik ein zweidimensionales Bild der Vorlage auf einen Flächenbildsensor geworfen und dieser mittels Elektronik abgetastet wird, wodurch die Helligkeits- und Farbinformation sogenannter Bildelemente oder Pixel der Vorlage entsprechend den Bildelementen des Sensors in Zeilen und Spalten eingeteilt seriell zur weiteren Verarbeitung zur Verfügung gestellt wird, während in der zweiten Gruppe in einer elektronischen Zeilenkamera nur ein eindimensionales Bild der Vorlage, also eine Zeile der Vorlage, auf einen Zeilensensor geworfen und dieser mittels Elektronik abgetastet wird, wodurch die Helligkeits- und Farbinformation der Bildelemente oder Pixel der Vorlage entsprechend den Bildelementen des Sensors nur in Spalten eingeteilt seriell zur weiteren Verarbeitung zur Verfügung gestellt wird, während die Einteilung in Zeilen durch eine relative Bewegung zwischen Vorlage und Zeilenkamera vorgenommen werden muß.

Die relative Bewegung der Sensorzeile über die Vorlage wird beim Handscanner durch ein ruhiges und gleichmäßiges Ziehen des auf der Vorlage aufliegenden Handscanners über die Vorlage erreicht. Dabei überstreicht eine Beleuchtung in Form eines schmalen durch Leuchtdioden erzeugten Lichtstreifens die Vorlage, das von der Vorlage zurückgeworfene Licht, das die Farb- und Helligkeitsinformation enthält, wird durch eine aus im Handscanner fest angeordneten Spiegeln und Linsen bestehende Optik auf den CCD-Zeilensensor projiziert, so daß dieser eine Zeile der Vorlage auswerten kann. Eine Faltung des Strahlengangs mit der Optik erlaubt es, eine relativ lange Zeile, beispielsweise 4 Zoll lang, auf einen relativ kurzen Sensor abzubilden und kleine Abstandsschwankungen durch relativ große Tiefenschärfe auszugleichen. Eine sich beim Ziehen des Handscanners auf der Vorlage abrollende Walze hilft zum einen zu einer möglichst gradlinigen und unverkanteten Relativbewegung des Handscanners zur Vorlage, zum anderen wird der Drehwinkel der Walze durch Inkrementalgeber erfaßt und ausgewertet. So kann auch die relative Position jeder erfaßten Zeile auf der Vorlage ermittelt werden.

Bei Durchlaufscannern, wie sie oft bei Faxgeräten verwendet werden, wird die auf der Vorlage abrollende Walze angetrieben, so daß die Relativbewegung durch das Durchziehen der Vorlage durch den Scanner bewirkt wird.

In Flachbettscannem liegt die Vorlage mit der abzutastenden Seite auf einer Glasplatte, während auf der anderen Seite dieser Glasplatte eine dem Handscanner entsprechende Einheit aus Beleuchtung, Optik und CCD-Zeilensensor auf einer zur Glasplatte parallelen Führung unverkantet von einem Antrieb bewegt wird.

Bei Fotokopiergeräten gibt es zur Abbildung einer Vorlage auf eine fotoempfindliche Trommel vorzugsweise zwei Verfahren, nämlich erstens eine synchrone Bewegung von Vorlage und Trommel, bei der ein in Längsrichtung der Vorlage schmaler, die gesamte Breite der Vorlage umfassender streifenförmiger Bereich der Vorlage auf einen schmalen Streifen des Zylinders scharf abgebildet werden kann, wobei der streifenförmige Bereich durch die synchrone Bewegung von Vorlage und Zylinder die gesamte Länge der Vorlage abtastet und auf dem Umfang des Zylinders abgebildet wird, und zweitens eine Abtastung der Vorlage über ein System aus zwei Spiegeln, wobei sich der erste Spiegel über die volle Länge der Vorlage, der zweite Spiegel nur über einen halb so langen Weg bewegt, und der Strahlenweg so geführt ist, daß der Abstand zwischen Vorlage und Abbildungsoptik zur Projektion der Vorlage auf die sich synchron mit der linearen Bewegung der Spiegel drehende Trommel, gemessen entlang des Strahlenweges, konstant bleibt und so die Vorlage durch einen schmalen, sich über die Länge der Vorlage verschiebenden streifenförmigen Bereich scharf auf die Mantelfläche der Trommel abgebildet wird.

Bekannt sind auch Scanner, die eine zylindrische Form der Vorlage voraussetzen oder erzwingen, um die Abtastung der Vorlage durch Rotation von Beleuchtung, Abbildungsoptik und Sensor um eine Achse zu realisieren.

In EP 0 670 555 A1 ist dargestellt, daß auch ein Flächensensor bezüglich einer Fläche bewegt werden kann, und wie dann das datentechnische Abbild der Oberfläche gewonnen und verarbeitet werden kann. Die Bewegung einer als Stift ausgestalteten Ausführung über die Oberfläche der Vorlage erfolgt dabei von Hand.

In EP 0 164 713 A1 ist dargestellt, wie der Abstand einer Sensorzeile von einer ebenen abzutastenden Vorlage dadurch konstant gehalten werden kann, daß ein Rollkörper am vorlageseitigen Ende eines diesen Abstand verkörpernden Stabes neben der Vorlage auf einer zu dieser parallelen und im Abstand des Abrollradius des Rollkörpers befindlichen Bahn geführt wird, während das andere Ende des Stabes von einer Linearführung auf- und abgeführt wird. Damit wird nur mit relativ aufwendigen Führungen und großem Bauvolumen eine gute Abtastung der Vorlage erreichbar, wenn die Verwendung unter einer Führungsbahn möglich ist, die von der Sensorzeile aus gesehen noch hinter (unter) der Oberfläche der abzutastenden Vorlage liegt, was ein Scannen ausschließt, bei welchem der Scanner auf die Vorlage aufgesetzt werden soll.

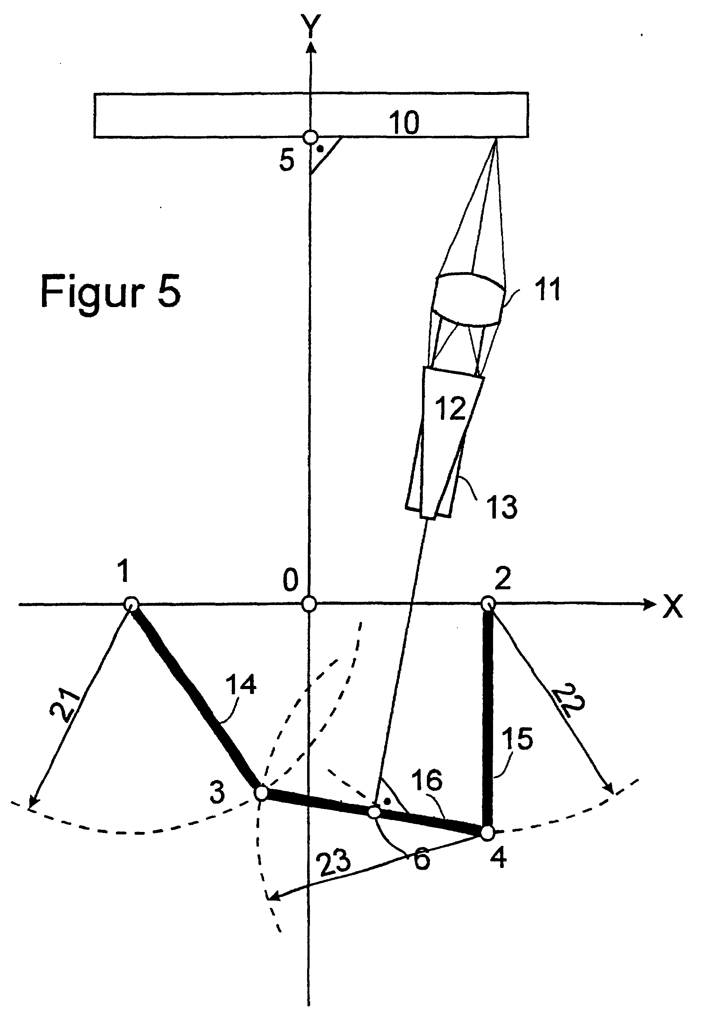

DE - A - 32 16 736 zeigt eine Vorrichtung zur Ablenkung und zum Richten einer empfangenen Strahlung, in welcher ein Spiegel auf einem Träger befestigt ist. Der Träger ist auf zwei Punkten angeordnet, die gleichzeitig jeweils mit unterschiedlichen Drehungsfaktoren auf gekrümmten Bahnen laufen, wobei der Spiegel gleichzeitig gedreht und verschoben wird (siehe insbesondere Abbildung 5).

Die Erfindung hat die Aufgabe, in einem kleinen und kostengünstig herstellbaren, auf einer ebenen Vorlage in fester Position befindlichen Gerät die Oberfläche der Vorlage so auf einen Zeilensensor abzubilden, daß für die einzelnen Zeilen der Vorlage ein für eine scharfe Abbildung ausreichend konstanter Abstand zwischen Vorlage und Optik sowie zwischen Optik und Zeilensensor eingehalten wird. Das fortlaufende Auslesen der Information des Zeilensensors soll ein in Zeilen aufgelöstes datentechnisches Abbild des gesamten zur Abtastung vorgesehenen Bereiches der Oberfläche der Vorlage zur weiteren Verarbeitung zur Verfügung stellen. Dabei soll die Lichtführung so erfolgen, daß von der Oberfläche ein ausreichend helles und kontrastreiches Bild auf dem Zeilensensor entsteht, das nicht durch Reflexionen von Bauteilen des Gerätes oder der Oberfläche der Vorlage gestört wird, ohne daß der zur Unterbringung von Beleuchtungs- und Abbildungsoptik nötige Raum die Verwendung eines unhandlichen Gehäuses erforderlich macht. Weiterhin soll eine Realisierung der Erfindung eine preiswerte und robuste mechanische Konstruktion erlauben.

Die Aufgabe wird erfindungsgemäß durch eine Vorrichtung gemäß Anspruch 1 gelöst. Vorzugsweise Ausgestaltungen finden sich in den Unteransprüchen.

Eine besonders günstige Ausgestaltung der Erfindung wird dadurch erreicht, daß ein Zeilensensor, eine Abbildungsoptik und eine Beleuchtungseinrichtung in fester Anordnung auf einem Optikträger zu einem mechanischen Teil kombiniert, das bezüglich einer Vorlage so bewegt werden kann, daß Punkte der optischen Achse der Abbildungsoptik sich auf einer v-förmigen Bahn bewegen, so daß der Abstand zwischen Vorlage und Zeilensensor beim Abtasten dieser gemessen entlang der optischen Achse im wesentlichen gleich bleibt. Überraschenderweise ist ein nahezu äquidistantes Abtasten mit einer solchen Vorrichtung nur bei eng begrenzter Auswahl der Dimensionierungsparameter, wie Länge der Viereckschenkel, Abstand zur Vorlage sowie den Winkeln zwischen den Gelenkschenkeln möglich, wobei bei auch nur geringem Abweichen extrem große Fehler auftreten.

Statt eines Zeilensensors kann auch eine Sensortrommel gewählt werden, deren Drehachse in Bezug auf Abbildungsoptik und Beleuchtungseinrichtung in dem Optikträger fest angeordnet ist. So kann der damit gestaltete Abtastkopf auch für Fotokopiermaschinen mit nicht bewegter Vorlage 10 eingesetzt werden, um eine Bauform mit kleiner Stellfläche zu ermöglichen.

Prinzipiell kann eine erfindungsgemäße Einrichtung mit Linearführungen realisiert werden. So kann eine Führung in der Ebene der Vorlage liegen, die zweite in einer dazu geneigten, vorzugsweise senkrechten Ebene. Die Bewegung von Punkten der optischen Achse zwischen den Linearführungen verläuft v-förmig, die der Linearführungen natürlich linear. Die Herstellung von Linearführungen ist jedoch aufwendig, kleines Spiel der Führungen nur schwer zu erreichen und die zu überwindende Reibung relativ groß. So wird eine besonders günstige Ausgestaltung der Erfindung mit der Verwendung eines Gelenkvierecks erreicht, dessen vier Seiten durch zwei Gelenklager, die in einem Gehäuse der Vorrichtung bezüglich der Vorlage fest positioniert sind, durch zwei in diesen Gelenklagern gelagerten Arme und durch einen Optikträger, auf dem die beiden Arme in Gelenklagern gelagert sind, definiert sind.

Während die durch ein Gelenkviereck erreichbare Bewegungssteuerung auch durch andere mechanische Lösungen simuliert werden kann, beispielsweise durch geformte Bahnen für die zwei Gelenkpunkte oder andere Punkte des bewegbaren Optikträgers, so ergibt die Verwendung von vier Drehlagern in den Gelenken eine sehr preiswerte Lösung mit hoher Präzision und Stabilität bei geringer mechanischer Reibung.

Im Vergleich zu den bisher bekannten Lösungen für ebene Vorlagen läßt die Erfindung eine Erzielung besonders kleiner Bauformen zu. So benötigen Scanner und Fotokopierer mit bewegter Optik, die entweder mittels bewegter Spiegelsysteme oder durch bewegte Abbildungsoptik realisiert ist, deutlich über die Vorlagengröße hinausgehende Abmessungen.

Eine erfindungsgemäße Dimensionierung der Abmessungen erlaubt eine weitgehend freie Festlegung wichtiger Bezugsmaße, wie den Abstand aller Teile von der Vorlage, den Winkelbereich für die relative Neigung der optischen Achse zur Vorlage und die abzutastende Breite der Vorlage, und erzielt geringe Abweichungen der von der Optik auf den Zeilensensor scharf abgebildeten Zeilen von der Ebene der Vorlage und damit eine geringe erforderliche Schärfentiefe. So kann der lichte Durchmesser der Optik relativ groß gewählt werden, wodurch sich die durch Beugung an der Optik erzeugte Unschärfe der Abbildung vermindert und das von der Vorlage auf den Zeilensensor abgebildete Lichtbündel verbreitert. Damit steht mehr Helligkeit am Zeilensensor zur Verfügung. Dies kann dazu benutzt werden, die Abtastgeschwindigkeit zu erhöhen und/oder die Beleuchtungseinrichtung mit geringerer Lichtleistung zu betreiben.

Eine günstige Gestaltung der Erfindung wird dadurch erreicht, daß die zur Beleuchtung nötige Lichtleistung durch dieselbe Optik, die auch die Abbildung der Vorlage auf den Sensor vornimmt, auf die Vorlage fokussiert wird. Durch eine versetzte optische Achse des Beleuchtungsstrahlbündels und Spiegel kann erreicht werden, daß das Beleuchtungsstrahlbündel unter einem Winkel auf die Vorlage trifft, der dazu führt, daß nur rückgestreutes, nicht aber reflektiertes Licht auf den Zeilensensor trifft. Dabei kann die Erzielung eines schmalen, aber mindestens die Zeilenlänge erreichenden Lichtflecks, eines sogenannten Lichtbalkens, auf der Vorlage durch geeignete Linsen oder Spiegel im Strahlengang erreicht werden, beispielsweise durch Zylinderlinsen oder gekrümmte Spiegel.

Durch geeignete Spiegeldimensionierung kann der Optikträger so ausgebildet werden, daß er einen sich in Richtung zur Vorlage hin verjüngenden Kasten darstellt, der einschließlich seiner möglichen Bewegungen einen Raum einnimmt, der nicht oder zumindest nicht wesentlich breiter als die Vorlage und mechanisch sehr stabil ist.

Fertigungstechnisch besonders günstig ist es, wenn zur Beleuchtung dienende Lichtquellen, beispielsweise eine oder mehrere Leuchtdioden, gemeinsam mit dem Zeilensensor auf einer Leiterplatte angebracht werden können, beispielsweise neben dem Zeilensensor.

Eine besonders kleine Bauform kann erreicht werden, wenn der Strahlengang zwischen Optik und Zeilensensor gefaltet wird. Beispielsweise haben übliche Zeilensensoren Gehäuseabmessungen von 10 mm mal 40 mm. Bei einer Zeilenlänge von beispielsweise 20 mm ist also der Zeilensensor doppelt so lang, so daß sich bei nicht gefaltetem Strahlengang eine Dicke des Gehäuses von über 40 mm ergibt. Eine Verkleinerung der Abmessungen des Zeilensensors ist nur beschränkt möglich, weil damit auch die Sensorflächen kleiner werden und erforderliche Lichtmengen und Abbildungsschärfe zunehmen müßten.

In den gefalteten Strahlengang kann auch das Beleuchtungsstrahlbündel mit einbezogen werden, so daß die zur Beleuchtung dienenden Lichtquellen weiterhin neben dem Zeilensensor angeordnet sein können. Es ist jedoch auch möglich, den reflektierenden Spiegel so schmal zu wählen, daß das Beleuchtungsstrahlbündel seitlich daran vorbeigeht, also bis zum Auftreffen auf die Optik nicht gefaltet verläuft.

Weitere günstige Gestaltungsmöglichkeiten erfindungsgemäßer Vorrichtungen können den Figuren und der Tabelle entnommen werden.

Die Figuren zeigen

Figur 1: Übersicht über die geometrische Anordnung;
Figur 2: v-förmige Bahn;
Figur 3: Lage der Position, die scharf auf den Sensor abgebildet wird;
Figur 4: Anordnung mit gefaltetem Strahlengang;
Figur 5: Übersicht mit gefaltetem Strahlengang;
Figur 6: Darstellung geometrischer Optik;
Figur 7: Darstellung der Bezierkurve L3m in Abhängigkeit von L1m;
Figur 8: Schnitt senkrecht zur Darstellungsebene der Figur 1;
Figur 9: Beleuchtung mit durch die Optik tretendem Lichtbündel unter Verwendung von Spiegeln;
Figur 10: Änderung des Abtastwinkels.

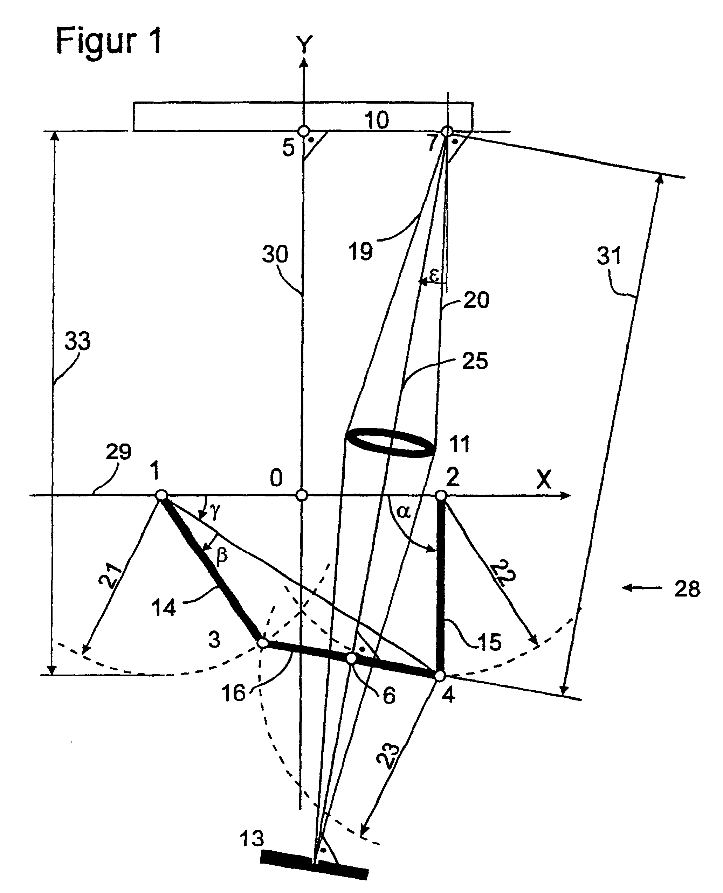

**Figur 1** zeigt eine besonders günstige Ausgestaltung der Erfindung unter Verwendung eines Gelenkviereckes in schematischer Darstellung und einer willkürlichen Position.

Das Gelenkviereck 28 liegt in der Darstellungsebene. Somit genügt eine Beschreibung der Geometrie in zweidimensionalen kartesischen Koordinaten X und Y. Entsprechend sind die Punkte Pn mit n=0,1,...,9 den Bezugszeichen 0,1,...,9 zugeordnet und besitzen die X-Koordinaten Pnx und die Y-Koordinaten Pny. Das Gelenkviereck umfaßt die zwei bezüglich der Vorlage 10 festen Gelenkpunkte 1 und 2 sowie die beweglichen Gelenkpunkte 3 und 4. Der Abstand 21 der Punkte 1 und 3 ist mit L1, der Abstand 22 der Punkte 2 und 4 mit L2, der Abstand 23 der Punkte 3 und 4 mit L3 und der Abstand 24 der Punkte 1 und 4 mit L4 bezeichnet. Die Drehachsen des Gelenkvierecks 28 befinden sich in den Gelenkpunkten 1 bis 4 und stehen zur Darstellungsebene senkrecht. Ebenso sind die Vorlage 10, deren Zeilen sowie der Zeilensensor 13 senkrecht zur Darstellungsebene angeordnet.

Zur Vereinfachung der mathematischen Darstellung sind ohne Beschränkung der Allgemeinheit der Bezugspunkt 0 des Koordinatensystems (X,Y) willkürlich in die Mitte zwischen den bezüglich der Vorlage festen Gelenkpunkte 1 mit den Koordinaten (P1x, P1y = 0) und 2 mit den Koordinaten (P2x = -P1x, P2y = 0) und die X-Achse 29 des Koordinatensystems willkürlich durch die Punkte 1 und 2 gelegt.

Der Mittelpunkt der Strecke von Gelenkpunkt 3 nach Gelenkpunkt 4 ist als Punkt 6, der der Vorlage nähere Punkt mit dem Abstand 31, auch als L5 bezeichnet, zu dieser Strecke in Punkt 6 ist als Punkt 7 benannt. Punkt 7 stellt den Punkt dar, von dem ausgehendes Licht innerhalb des Lichtbündels 19, 20 mit der optischen Achse 25 durch die Optik 11 auf den Zeilensensor 13 fokussiert wird.

Die der Optik 11 zugewandte abzutastende Seite der Vorlage 10 ist parallel zur X-Achse 29 des Koordinatensystems ausgerichtet, die mittlere Zeile der Vorlage hat die Position 5. Optik 11 und Zeilensensor 13 haben bezüglich der Strecke von Punkt 3 nach Punkt 4 eine feste Lage, sind zur Mittelsenkrechten dieser Strecke zentrisch und rechtwinklig angeordnet. Die Koordinaten der Punkte n mit n=(0,1,2,...) sind in der Darstellung mit (Pnx, Pny) bezeichnet, wobei Pnx die X-Koordinate und Pny die Y-Koordinate im Koordinatensystem darstellen.

Der Winkel $\alpha$ ist der zwischen der Strecke von Gelenkpunkt 2 nach Gelenkpunkt 1 und der von Gelenkpunkt 2 nach Gelenkpunkt 4, der Winkel $\gamma$ ist der zwischen der Strecke von Gelenkpunkt 1 nach Gelenkpunkt 2 und der von Gelenkpunkt 1 nach Gelenkpunkt 4, der Winkel $\beta$ ist der zwischen der Strecke von Gelenkpunkt 1 nach Gelenkpunkt 4 und der von Gelenkpunkt 1 nach Gelenkpunkt 3, der Winkel $\epsilon$ ist der zwischen der Strecke von Gelenkpunkt 1 nach Gelenkpunkt 2 und der von Gelenkpunkt 3 nach Gelenkpunkt 4, somit auch der zwischen der optischen Achse 25 von Punkt 7 nach Punkt 6 und dem Lot auf die Vorlage 10.

Mit der Wahl von Länge 21 (L1) gleich Länge 22 (L2) lassen sich die Koordinaten und Winkel beispielsweise in Abhängigkeit vom Winkel $\alpha$ berechnen:

$$P4x = P2x - L1 * \cos \alpha$$

$$P4y = P2y + L1 * \sin \alpha$$

$$L4 = ((P4y - P1y)^2 + (P4x - P1x)^2)^{1/2})$$

$$s = 0.5 * (L1 + L3 + L4)$$

$$\beta = 2 * \arctan (((( s - L4) * (s - L1)) / (s * (s - L3)))^{1/2})$$

$$\gamma = \arctan ( (P4y - P1y) / (P4x - P1x))$$

$$P3x = P1x + L1 * \cos (\beta + \gamma)$$

$$P3y = P1y + L1 * \sin(\beta + \gamma)$$

$$P6x = 0.5 * (P3x + P4x)$$

$$P6y = 0.5 * (P3y + P4y)$$

$$P7x = P6x + L5 * (P3y - P4y) / L3$$

$$P7y = P6y + L5 * (P4x - P3x) / L3$$

$$\epsilon = \arctan( (P4y - P3y)/(P4x - P3x))$$

Die Wahl des Winkels $\alpha$ als unabhängige Variable ist willkürlich.

Eine beispielhafte Ausgestaltung der Erfindung ist für P5y=64 dargestellt, wobei alle Maße beispielhaft in Millimetern sein können. Zur Erzielung einer anderen Größe können alle Maße proportional mit demselben Faktor vergrößert oder verkleinert werden. L1 und damit L2 werden im Regelfall so gewählt, daß die Gelenkpunkte 1 und 2 nicht hinter der Vorlage liegen, also P1y und P2y nicht größer als P5y sind.

Für abzutastende Breiten bis etwa 80 mm ist eine Ausführung mit den Daten P2=( 24.80, 0.00), L1=L2=L3=32.00, P5=(0.00, 64.00) in Bezug auf mechanische Stabilität günstig. Es ergibt sich L5=94.77.

In der Tabelle 1 sind für bestimmte Werte des Winkels $\alpha$ sich ergebende Ergebnisgrößen dargestellt, wobei die Auflösung der Darstellung der Werte in der Tabelle bei den Koordinaten des Punktes 7 auf 1/100 mm gewählt wurde, während die Koordinaten der anderen Punkte nur mit 1mm Auflösung angegeben sind, um in etwa die Position der Punkte zu beschreiben.

Die Optimierung ist im dargestellten Beispiel für eine Ausnutzung der Tiefenschärfe der Abbildungsoptik von +/- 0.11 mm und eine zu nutzende Breite von 70 mm entsprechend einem Bereich für P7x von -35 mm bis +35 mm und für P7y von 64.11 mm bis 63.89 mm durchgeführt worden.

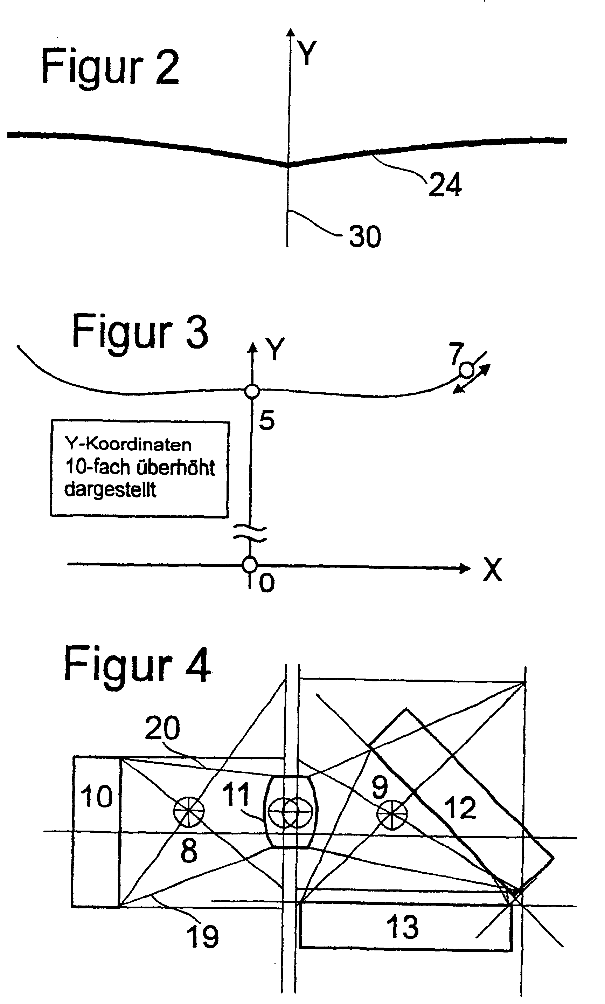

**Figur 2** zeigt den v-förmigen Verlauf des Punktes 6 bei vorstehender Dimensionierung, allerdings in einem anderen Maßstab als Figur 1. Würde auf der optischen Achse die Mittenposition des Zeilensensors 13 gewählt, so währe die Ausdehnung der v-förmigen Bahn in X-Richtung geringer, in Y-Richtung ausgeprägter.

**Figur 3** zeigt die sich ergebende Bahn des Punktes 7, die idealerweise auf einer Geraden läge, wobei die Y-Koordinaten zehnfach überhöht dargestellt sind, weil sonst die sich gegenüber der Y-Koordinate des Punktes 5 ergebenden Abweichungen in der Figur kaum erkennbar wären.

In einer Ausgestaltung der Erfindung wird erreicht, einen Kembereich der Abtastung mit besonders hoher Präzision der Abbildung der Vorlage 10 auf den Zeilensensor 13 sowie einen an diesen Bereich außen anschließenden Randbereich mit geringeren Anforderungen an die Präzision der Abbildung der Vorlage 10 auf den Zeilensensor 13 zu realisieren, wobei der Randbereich bei der Abtastung zur Erfassung gröberer Strukturen der Vorlage 10, wie Kantenerkennung oder zur Beschreibung der Vorlage gröber codierter Daten dient, während der Kernbereich mit voller Auflösung abgetastet wird. Im dargestellten Beispiel umfaßt der Kernbereich einem Bereich für P7x von -32.2 mm bis +32.2 mm mit P2y von -64.11 mm bis -64.00 mm, während der Randbereich einem Bereich für P7x von -35 mm bis -32.2 mm sowie +32.2 mm bis +35 mm mit P2y von -64.00 mm bis -63.89 mm umfaßt. In diesem Falle liegt die für die Positionierung der Vorlage 10 maßgebliche Position des Punktes 5 optimalerweise bei P5x von 64.05 mm bis 64.06 mm, wodurch der Abstand des Punktes 7 von der Vorlage 10 im Kernbereich kleiner als 0.06 mm bleibt und Tschebyscheff-Charakteristik aufweist, während er im Randbereich 0.16 mm nicht übersteigt.

Typische Zeilensensoren 13, beispielsweise SONY ILX503A, haben eine Zeilenlänge von 2048 Bildpunkten, sogenannten Pixeln, mit einer Bildpunktgröße von 14 µm sowie einem Rasterabstand von 14 µm. Wenn die vom Zeilensensor zu erfassende Zeilenlänge einer senkrecht zur Ebene 27 verlaufenden Zeile der Vorlage 20.48 mm beträgt, so ergibt sich bei linearer Abbildung durch die Optik 11 eine notwendige Vergrößerung von 1.4 beziehungsweise eine auf die Vorlage 10 bezogene Pixelgröße von 10 µm mal 10 µm mit einem Rasterabstand von 10 µm.

Die **Figur 4** stellt einen zur Bezugsebene der Figur 1 senkrechten Schnitt in den Punkten 6 und 7 einer Ausgestaltung der Erfindung dar. Ein vergleichsweise langer Zeilensensor 13, der im Beispiel eine äußere mechanische Länge von etwa 42 mm und eine Zeilenlänge von 2048 mal 14 µm, also 28.672 mm hat, kann so platzsparend untergebracht werden. In der Figur 4 ist nur der lichtempfindliche Teil des Zeilensensors 13 dargestellt. Wesentlich ist die in Bezug auf die Vorlage 10 seitliche Versetzung der Optik 11 sowie die Verwendung eines Spiegels 12. Die dargestellten Abmessungen ergeben sich, wenn die Optik 11 mit einer Brennweite von 12.5 mm, einem Durchmesser von 9.5 mm und einem Abstand der Hauptebenen 17, 18 von 1.8 mm verwendet wird. Der Strahlengang ist in international üblicher Weise dargestellt. Entsprechendes ist in Horst Czichos (Hrsg.):Hütte - Die Grundlagen der Ingenieurwissenschaften, 29. Auflage, Berlin et al.: Springer-Verlag, 1989, ISBN 3-540-19077-5, S. 220 ff zu finden.

In **Figur 5** ist die Sicht auf die Bezugsebene der Figur 1 mit der in Figur 4 dargestellten Ausgestaltung für einen willkürlichen Winkel $\alpha$ zu sehen. Durch die Kombination von Verschiebung und Verdrehung des im Verhältnis zur Vorlage 10 beweglichen Optikträgers mit den Teilen Optik 11, Spiegel 12 und Zeilensensor 13 ist eine im Vergleich zu einer zur Vorlage parallelen Führung dieser Mechanik schmalere Bauform des gesamten Scannerkopfes zu erreichen, ohne daß der Winkel zwischen der Vorlage 10 und der optischen Achse 25 so weit vom rechten Winkel abweicht wie bei reiner Drehung der Optik, wenn für diese die Drehachse nicht weiter von der Vorlage 10 entfernt sein soll als es die Gelenkpunkte 3 und 4 in ihrer größten Entfernung bei $\alpha$ =90° bzw. $\beta + \gamma$ =90° sind.

In Figur 5 ist auch dargestellt, daß der Spiegel 12 trapezförmig ausgebildet ist, da sich das für die Abbildung einer Zeile auf den Zeilensensor 13 wirksame Lichtbündel mit zunehmendem Abstand von der Optik 11 verjüngt.

In den Figuren 4 und 5 ist eine relativ kleine Brennweite, bezogen auf die Zeilenlänge von 20.48 mm der Vorlage, dargestellt. Es können zum einen die kennzeichnenden Maße, die zur Festlegung der Punkte 1 bis 7 führen, alle im gleichen Verhältnis verkleinert werden, bis die abzutastende Vorlagenbreite zum Erreichen des maximal zulässigen Abstandes zwischen der Vorlage und dem Punkt 7 führt. Zum zweiten kann die Brennweite der Optik 11 vergrößert und die Positionierung von Optik 11, Spiegel 12 und Zeilensensor 13 erfindungsgemäß angepaßt werden.

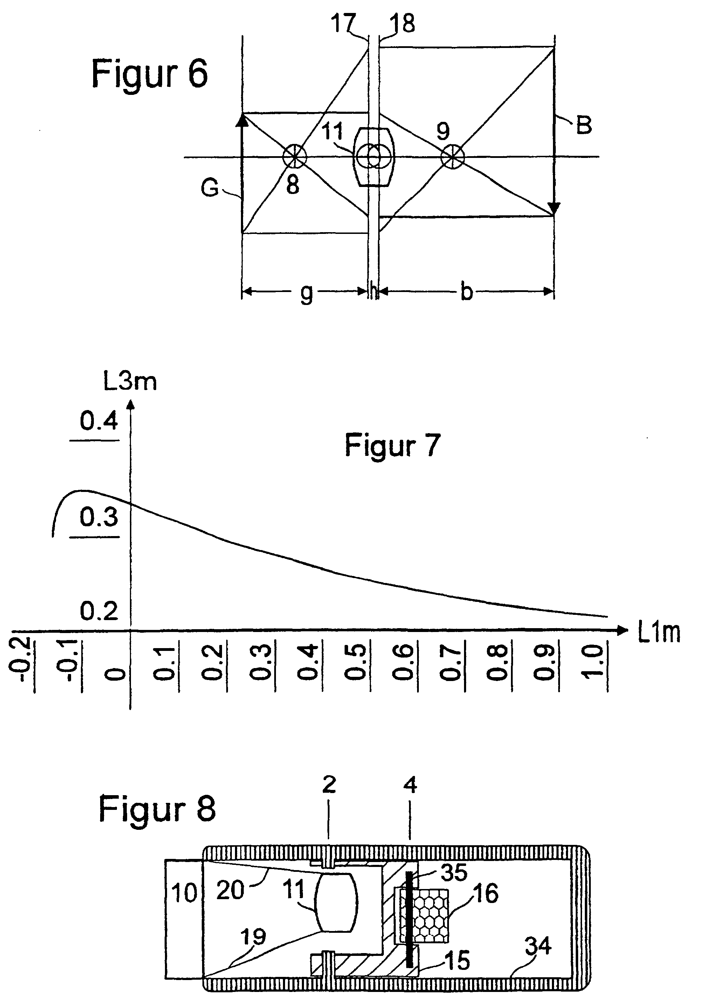

In **Figur 6** sind die verwendeten optischen Begriffe dargestellt. So wird der abzubildende Gegenstand G durch die Optik 11 in das Bild B abgebildet, wobei der Abstand zwischen dem Gegenstand G und der ersten Hauptebene 17 als Gegenstandsweite g, der zwischen der zweiten Hauptebene 18 und dem Bild B als Bildweite b und der zwischen den beiden Hauptebenen 17 und 18 als Hauptebenenabstand h bezeichnet wird. Zur Vereinfachung nimmt man zwischen den beiden Hauptebenen 17 und 18 die Strahlen als zur optischen Achse parallel laufend an, wobei als optische Achse die Gerade durch die beiden Brennpunkte 8 und 9 betrachtet wird. Bei der geometrischen Optik kommt es nicht auf den Durchmesser der Optik 11 an, so daß zur Konstruktion der Abbildung vom Gegenstand zum Bild die Darstellung der beteiligten Strahlenbündel ohne Bedeutung ist. Eine Abbildung im Gausschen Sinne der geometrischen Optik stellt eine Näherungsbetrachtung dar, die zur Erklärung der Erfindung ausreicht, zur präzisen Berechnung optimaler Lösungen aber nicht hinreichend ist, weil sie beispielsweise Beugungseffekte nicht berücksichtigt, bei denen der Durchmesser der Optik 11 eine wesentliche Rolle spielt.

Ein wesentlicher Vorteil der Erfindung liegt darin, daß Optik 11, Spiegel 12 und Zeilensensor 13 in einem starren Optikträger 16 montiert und gegebenenfalls justiert werden können, der in den den Gelenkpunkten 3 und 4 des Gelenkvierecks 28 entsprechenden Achsen gelagert wird.

In **Figur 7** ist die Bezierkurve zur Ermittlung des Maßes L3m, das zur Durchführung des erfindungsgemäßen Verfahrens zur Berechnung der Länge 23, L3 genannt, benötigt wird, grafisch dargestellt. Mit den angegebenen Daten kann die Ermittlung in allgemein bekannter Weise auch mathematisch durchgeführt werden.

Zur Beschreibung des erfindungsgemäßen Verfahrens wird grundsätzlich ohne Beschränkung der Allgemeinheit festgelegt:

$$P1y = P2y = P0y = 0$$

$$P1x = -P2x \text{ mit } P2x \gg 0$$

$$P5x = 0$$

$$L1 = L2$$

Es kann zunächst das Bezugsmaß 33, in den Formeln L0 genannt, festgelegt werden, das der maximalen Ausdehnung der erfindungsgemäßen Vorrichtung zwischen Vorlage 10 und Gelenkviereck 28 bezüglich der Y-Achse 30 des Koordinatensystems entspricht.

Es kann der Abstand P5y des Koordinatenursprungs 0 und somit der festen Gelenkpunkte 1 und 2 von der Vorlage 10 gewählt werden, wobei eine der Vorlage 10 möglichst nahe Lage ein besonders breites Abtastfeld ergibt.

Damit ergeben sich die Längen 21 (L1), 22 (L2) des ersten und zweiten beweglichen Arms 14,15 zu

$$L1 = L2 = L0 - P5y.$$

Die mögliche Abtastbreite der Vorlage 10 ergibt sich durch den zur geforderten Genauigkeit gehörenden Maximalwert der Auslenkung des Punktes 7 in X-Richtung P7x(max), für den der Abstand zur Vorlage 10, also |P7y - P5y|, dieser Genauigkeit entspricht, zum Doppelten von P7x(max). P7x(max) kann abgeschätzt werden:

$$P7x(max) \approx L0 * (0.58333 - 0.175*P5y/L0 - 0.18*(P5y/L0)^2)$$

Es kann die Lage P1x, P2x der beiden festen Gelenkpunkte 1, 2 des Gelenkvierecks 28 gewählt werden. Je größer der Wert P2x gewählt wird, desto höher ist die Festigkeit und die Unempfindlichkeit gegen kleine Abweichungen, desto breiter wird aber auch die insgesamt für die Einrichtung benötigte Ausdehnung in Richtung der X-Achse 29 des Koordinatensystems. Weiterhin gilt folgende Obergrenze:

$$P2x(max) = L0 * (1.16666 - P5y/L0)$$

Die Länge 23, in den Formeln L3 genannt, des einer dritten beweglichen Viereckseite entsprechenden Optikträgers 16 wird in folgenden Schritten bestimmt:

a)

$$Xx = P2x/L0$$

b)

$$Vxx = 0.66585 - 4.2054 \cdot Xx + 5.6624 \cdot Xx^2 - 3.8695 \cdot Xx^3$$

c)

$$Vy = 0.19421 - 0.95048 \cdot Xx + 0.02057 \cdot Xx^2 + 0.3072 \cdot Xx^3$$

d)

$$V = 0.9264 + 0.87303 \cdot Xx - 2.6595 \cdot Xx^2 + 0.811 \cdot Xx^3$$

e)

$$L1m = (L1/L0 + Vxx) \cdot V$$

f) In der durch die Punkte
    (-0.1625 , 0.3)
    (-0.13125 , 0.46458)
    (0.01146 , 0.25625)
    (1.0, 0.2151)
    bestimmten Bezierkurve der zwei Dimensionen L1m, L3m wird der zu L1m gehörende Wert L3m ermittelt.

g)

$$L3 = L0 \cdot (L3m - Vy)$$

h) Mit L3 werden die sich für Punkt 7 ergebenden Koordinaten P7x, P7y für verschiedene Winkel $\alpha$ berechnet, gegebenenfalls unter Berücksichtigung von zu berücksichtigenden Fertigungstoleranzen für die Positionen der Gelenkpunkte 1, 2, 5 sowie die Längen 21, 23, 24 der beweglichen Viereckseiten 14, 15, 16 des Gelenkvierecks 28, und L3 geringfügig korrigiert als Länge 23 verwendet.

Am Beispiel zur Auslegung eines Scannerkopfes mit einer Abtastbreite von 60 mm wird das Verfahren im folgenden dargestellt. L0 wird mit 60 mm gewählt, P2x mit 25 mm und P5y mit 15 mm. P2x(max) ergibt sich zu 55 mm, wird also eingehalten, P7x(max) zu ungefähr 31.7 mm, also ausreichend. L1 ergibt sich zu 45 mm, Xx zu 0.41667, Vxx zu -0.38326, Vy zu -0.17603 und V zu 0.88711. Damit errechnet sich L1m zu 0.32534. In der Bezier-Kurve kann man dazu L3m zu 0,2782 ablesen. Damit ergibt sich L3 zu 27.2538 mm. Eine Nachprüfung mit Feinoptimierung ergibt für eine Abtastbreite von 60 mm entsprechend einem Wert für P7x von 30 mm eine maximale Differenz |P7y - P5y| von 87.5 Mikrometern bei einer Verkürzung von L3 um 6.27 Promille auf 27.083 mm. Damit wird Winkel $\alpha$ bis 92.1 Grad ausgesteuert, die optische Achse erreicht eine Neigung $\varepsilon$ zur Vorlage 10 von 14.8 Grad. Somit geht die optische Achse in der Randlage durch den Punkt (26, 0), das Lager des zweiten festen Gelenkpunktes 2 darf also nicht in den Bereich des wirksamen Lichtbündels zwischen 19 und 20 ragen. Das kann dadurch erreicht werden, daß wie in Figur 5 ersichtlich die Gelenkpunkte 1 und 2 ausreichend weit von der Vorlage 10 entfernt und/oder ausreichend weit in X-Richtung positioniert werden, oder dadurch, daß die beweglichen Viereckseiten 14, 15 in Stimmgabelform ihre festen Gelenkpunkte 1, 2 ausreichend weit oberhalb und unterhalb des wirksamen Lichtbündels besitzen.

In **Figur 8** ist in einem Schnitt parallel zur Y-Achse 30 und senkrecht zur Bezugsebene der Figur 1 bei einem $\alpha$ von 90 Grad beispielhaft dargestellt, wie die zu den festen Gelenkpunkten 1, 2 gehörenden Lager für die erste und zweite bewegliche Viereckseite 14, 15 durch Ausformung des Gehäuses 34 und die zu den beweglichen Gelenkpunkten 3, 4 gehörenden Lager zwischen dem ersten beziehungsweise zweiten beweglichen Arm 14, 15 und der dritten beweglichen Viereckseite, dem Optikträger 16 durch einen Lagerstift 35 gebildet werden können.

Bei einer Brennweite der Optik 11 von 12.5 mm und einer Vergrößerung von 1.4 ergibt sich eine Gegenstandsweite von 21.43 mm. Bei einem effektiven Durchmesser der Optik 11 von 8 mm ergibt sich ein Öffnungswinkel des von einer Zeile ausgehenden wirksamen Lichtbündels von arctan(0.5*8 mm/21.43 mm) = 10.6 Grad. Die Bildweite ergibt sich zu 30 mm, der Öffnungswinkel entsprechend zu 7.6 Grad. Bei einem maximalen $\varepsilon$ von 14.8 Grad bleibt damit auf der Gegenstandsseite ein Bereich von 4.2 Grad frei, auf der Bildseite ein Bereich von 19 Grad, so daß der lichte Querschnitt des Gehäuses 34 in der Bezugsebene der Figur 1 mit abnehmender Y-Koordinate nicht zunehmen muß, sondern bis zur Optik 11 leicht und danach erheblich abnehmen kann.

Für die Beleuchtung ist sicherzustellen, daß die Winkelveränderung der optischen Achse in Bezug auf die Vorlage 10 von ±$\varepsilon$ keine wesentliche Änderung der Vorlagenhelligkeit und keine durch die Optik 11 aufgenommene Reflexion bewirkt. Dazu ist der Öffnungswinkel des Lichtbündels der Beleuchtungseinrichtung ausreichend klein zu halten und das Lichtbündel gegen die Vorlage in einem günstigen Winkelbereich geneigt zu halten.

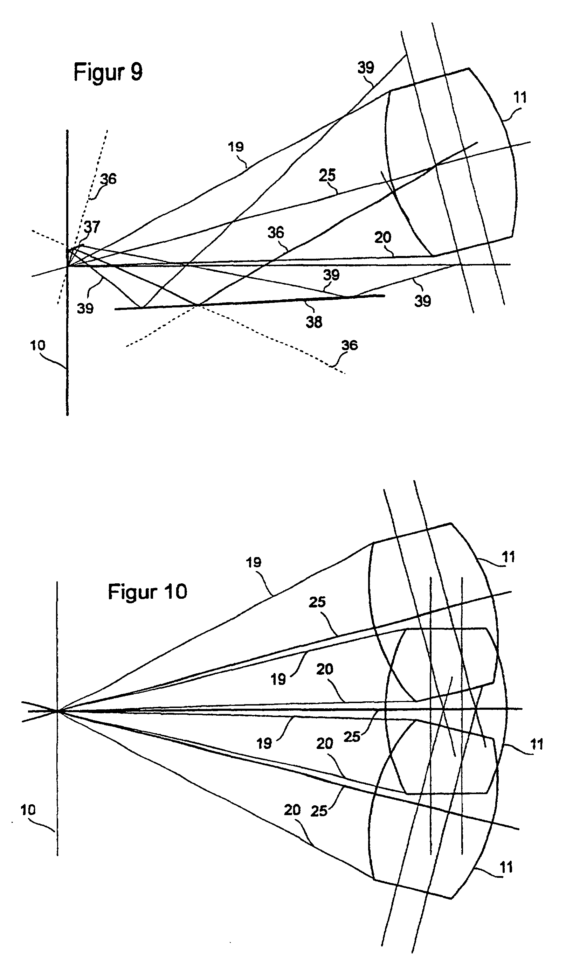

In **Figur 9** ist dargestellt, wie ein Lichtbündel zur Beleuchtung, das die Optik 11 zur Fokussierung auf die Vorlage mitbenutzt, unter Verwendung mehrerer, im dargestellten Beispiel zweier, Spiegel 37, 38 geführt werden kann. Die gezeichnete Begrenzung 39 des Lichtbündels stellt ein besonders breites Lichtbündel einschließlich zu berücksichtigender Lagetoleranzen der Spiegel 37, 38 dar, das sich in der durch den maximalen Wert des Winkels $\varepsilon$ der optischen Achse 25 in Bezug auf die Vorlage 10 verursachten maximalen Neigung der optischen Achse 36 des Lichtbündels in Bezug auf die Vorlage 10 bei Erreichen der Vorlage 10 durch das Lichtbündel befindet.

In **Figur 10** ist dargestellt, welchen Winkelbereich die seitlichen Begrenzungen 19, 20 des wirksamen Lichtbündels von der Vorlage 10 über die Optik 11 zum Zeilensensor 13 vor Erreichen der Optik 11 überdecken. Dieser Bereich ist von der durch die Vorlage 10 reflektierten Strahlung des Lichtbündels der Beleuchtung in Figur 8 freigehalten.

Es ist deutlich zu erkennen, daß bei einem relativ großen Durchmesser der Optik 11 zwar ein großer Winkel der Strahlung als wirksames Lichtbündel erfaßt, aber auch die Grenze der Realisierbarkeit erreicht wird. In einer weiteren Ausgestaltung der Erfindung wird die lichte Weite der Optik 11 vom Kreis abweichend bestimmt, beispielsweise in Form eines Rechtecks, bei dem die lange Seite parallel zur Zeile verläuft. Damit können die in den Figuren 9 und 10 dargestellten Lichtbündel schmäler gestaltet werden und das Lichtbündel der Beleuchtung steiler auf die Vorlage auftreffen. Bei einem Durchmesser der Optik 11 von 8 mm ergibt sich ein optischer Querschnitt von 50 mm$^2$, bei einem Rechteck von 8 mm*4 mm ein Querschnitt von 32 mm$^2$, also von 64 Prozent bei einer Verringerung des Winkels auf die Hälfte, während es bei 4 mm Durchmesser nur 25 Prozent gewesen wären. Als Grenze der Verschmälerung sollte die Beugungsbegrenzung beachtet werden.

Durch eine günstige Wahl der Neigung der Spiegel 37 und 38 läßt sich erreichen, daß sich die Spiegel relativ nahe an den seitlichen Begrenzungen 19, 20 des wirksamen Lichtbündels anordnen lassen und somit die Abmessungen des Gehäuses 34 in Richtung der X-Achse 29 im Bereich zwischen Vorlage 10 und Optik 11 klein halten lassen.

Zur Erzeugung des Lichtbündels der Beleuchtung sind lichtaussendende Dioden, sogenannte LED's, geeignet. Verwendet man diese auf der vorlagenfernen Seite der Optik 11 mit gegenüber der optischen Achse 25 der Optik 11 verdrehter und/oder versetzter optischer Achse 36, so kann man durch geeignete Positionierung der LED sowie durch Wahl der Brennweite, Position und Ausrichtung einer Zylinderlinse im Strahlengang des Lichtbündels der Beleuchtung erreichen, daß das Bild der lichtaussendenden Fläche der LED auf der Vorlage 10 als heller Strich oder schmaler Balken die abzubildende Zeile beleuchtet. Eine Verwendung mehrerer LED's kann auch mit einer gemeinsamen Zylinderlinse zur Erhöhung der Lichtstärke und/oder zur Vergleichmäßigung dienen.

Die in Figur 8 dargestellte Verwendung zweier Spiegel 37, 38 kann beidseitig symmetrisch erweitert werden. Zusätzlich können die beiden Spiegel 37, 38 auf jeder der beiden Seiten so positioniert und verlängert werden, daß daraus ein gemeinsames geknicktes Bauteil werden kann. Damit wird gleichzeitig erreicht, daß zum einen ein Eindringen von Fremdlicht in den optischen Bereich weitestgehend unterdrückt wird, daß zum zweiten bei Verbund der beiden Spiegelkombinationen 37, 38 mit einer Boden- und/oder Deckenplatte als dritter beweglicher Viereckseite, als Optikträger 16 in Form eines mechanisch stabilen beweglichen Teils gestaltet werden kann.

In einer Ausgestaltung können die Spiegel 37,38 auch gekrümmt werden, je nach Ausgestaltung sogar ohne einen Knick, sondern mit gleitendem Übergang, so daß nur noch ein Spiegel auf jeder Seite erkennbar ist. Damit kann eine Zylinderlinse entfallen.

Vergleicht man die Ergebnisse der Erfindung mit bisherigen Lösungen, so erhält man im Vergleich zu linear bewegter Optik eine vereinfachte Mechanik mit einer Verkleinerung der notwendigen Gehäusebreite. Im Vergleich zu rein rotatorischer Abtastung mit gleichem Abtastwinkel und damit einem Radius von über 100 mm kann eine ebene Vorlage verwendet werden, während dort die Durchbiegung mit etwa 4 mm nicht mehr zu vernachlässigen wäre, und ebenfalls eine erhebliche Verkleinerung der Gehäusebreite und -länge erzielt werden, da im Laufe einer Abtastung der Vorlage 10 gleichzeitig Neigung und Verschiebung der Optik 11 vorgenommen werden.

Tabelle 1:

| P7x | P7y | P6x | -P6y | P4x | -P4y | P3x | -P3y | α | β | γ | ε |
|---|---|---|---|---|---|---|---|---|---|---|---|
| 0.00 | 64.00 | 0 | 31 | 16 | 31 | -16 | 31 | 74.0 | 37.0 | 37.0 | 0.0 |
| 3.15 | 64.00 | 1 | 31 | 17 | 31 | -15 | 30 | 76.2 | 35.3 | 36.5 | 1.2 |
| 5.65 | 64.01 | 2 | 31 | 18 | 31 | -14 | 30 | 77.9 | 34.0 | 36.1 | 2.2 |
| 7.46 | 64.02 | 3 | 31 | 19 | 31 | -13 | 30 | 79.1 | 33.0 | 35.8 | 2.8 |
| 9.29 | 64.03 | 3 | 31 | 19 | 32 | -13 | 30 | 80.3 | 32.0 | 35.5 | 3.5 |
| 10.41 | 64.04 | 4 | 30 | 20 | 32 | -12 | 29 | 81.0 | 31.3 | 35.3 | 4.0 |
| 11.91 | 64.05 | 4 | 30 | 20 | 32 | -12 | 29 | 82.0 | 30.5 | 35.1 | 4.6 |
| 13.06 | 64.06 | 5 | 30 | 21 | 32 | -11 | 29 | 82.7 | 29.9 | 34.9 | 5.0 |
| 14.60 | 64.07 | 5 | 30 | 21 | 32 | -11 | 29 | 83.6 | 29.0 | 34.6 | 5.6 |
| 15.77 | 64.08 | 6 | 30 | 22 | 32 | -10 | 28 | 84.4 | 28.4 | 34.4 | 6.1 |
| 17.37 | 64.09 | 6 | 30 | 22 | 32 | -10 | 28 | 85.3 | 27.5 | 34.2 | 6.7 |
| 19.40 | 64.10 | 7 | 30 | 23 | 32 | -9 | 28 | 86.5 | 26.3 | 33.8 | 7.5 |
| 25.42 | 64.11 | 9 | 29 | 25 | 32 | -7 | 26 | 89.9 | 22.9 | 32.9 | 10.0 |
| 26.33 | 64.10 | 9 | 29 | 25 | 32 | -6 | 26 | 90.4 | 22.3 | 32.7 | 10.4 |
| 27.26 | 64.09 | 10 | 29 | 25 | 32 | -6 | 26 | 90.8 | 21.8 | 32.6 | 10.8 |
| 28.20 | 64.08 | 10 | 29 | 26 | 32 | -6 | 26 | 91.3 | 21.3 | 32.4 | 11.2 |
| 28.68 | 64.07 | 10 | 29 | 26 | 32 | -6 | 26 | 91.6 | 21.0 | 32.4 | 11.4 |
| 29.65 | 64.06 | 10 | 29 | 26 | 32 | -5 | 25 | 92.0 | 20.4 | 32.2 | 11.8 |
| 30.14 | 64.05 | 10 | 29 | 26 | 32 | -5 | 25 | 92.3 | 20.1 | 32.2 | 12.0 |
| 30.64 | 64.04 | 11 | 29 | 26 | 32 | -5 | 25 | 92.5 | 19.9 | 32.1 | 12.2 |
| 31.14 | 64.02 | 11 | 29 | 26 | 32 | -5 | 25 | 92.8 | 19.6 | 32.0 | 12.4 |
| 31.65 | 64.01 | 11 | 28 | 26 | 32 | -5 | 25 | 93.0 | 19.3 | 31.9 | 12.7 |
| 32.16 | 64.00 | 11 | 28 | 27 | 32 | -5 | 25 | 93.2 | 19.0 | 31.9 | 12.9 |
| 32.68 | 63.98 | 11 | 28 | 27 | 32 | -4 | 25 | 93.5 | 18.7 | 31.8 | 13.1 |
| 33.21 | 63.97 | 11 | 28 | 27 | 32 | -4 | 25 | 93.7 | 18.4 | 31.7 | 13.4 |
| 33.75 | 63.95 | 11 | 28 | 27 | 32 | -4 | 24 | 94.0 | 18.0 | 31.6 | 13.6 |
| 34.29 | 63.93 | 12 | 28 | 27 | 32 | -4 | 24 | 94.2 | 17.7 | 31.6 | 13.8 |
| 34.84 | 63.91 | 12 | 28 | 27 | 32 | -4 | 24 | 94.4 | 17.4 | 31.5 | 14.1 |
| 35.39 | 63.88 | 12 | 28 | 27 | 32 | -4 | 24 | 94.7 | 17.1 | 31.4 | 14.3 |
| 35.96 | 63.86 | 12 | 28 | 28 | 32 | -3 | 24 | 94.9 | 16.7 | 31.3 | 14.6 |
| 36.54 | 63.83 | 12 | 28 | 28 | 32 | -3 | 24 | 95.2 | 16.4 | 31.3 | 14.9 |
| 37.12 | 63.80 | 12 | 28 | 28 | 32 | -3 | 23 | 95.4 | 16.1 | 31.2 | 15.1 |
| 37.72 | 63.76 | 13 | 28 | 28 | 32 | -3 | 23 | 95.6 | 15.7 | 31.1 | 15.4 |
| 38.33 | 63.73 | 13 | 28 | 28 | 32 | -3 | 23 | 95.9 | 15.3 | 31.0 | 15.7 |
| 38.95 | 63.69 | 13 | 27 | 28 | 32 | -3 | 23 | 96.1 | 15.0 | 31.0 | 16.0 |
| 39.58 | 63.65 | 13 | 27 | 28 | 32 | -2 | 23 | 96.4 | 14.6 | 30.9 | 16.3 |
| 40.23 | 63.60 | 13 | 27 | 28 | 32 | -2 | 23 | 96.6 | 14.2 | 30.8 | 16.6 |
| 40.89 | 63.55 | 13 | 27 | 29 | 32 | -2 | 22 | 96.8 | 13.8 | 30.7 | 16.9 |
| 41.57 | 63.49 | 13 | 27 | 29 | 32 | -2 | 22 | 97.1 | 13.4 | 30.7 | 17.3 |

## Bezugszeichenliste

| 0 | Koordinatenursprung P0 (P0x, P0y) |
|---|---|
| 1 | (erster) fester Gelenkpunkt P 1 (P1x, P1y) |
| 2 | (zweiter) fester Gelenkpunkt P2 (P2x, P2y) |
| 3 | (erster) beweglicher Gelenkpunkt P3 (P3x, P3y) |
| 4 | (zweiter) beweglicher Gelenkpunkt P4 (P4x, P4y) |
| 5 | Mittelpunkt P5 (P5x, P5y) der Vorlage 10 |

| 6 | Mittelpunkt P6 (P6x, P6y) des Optikträgers 16 |
|---|---|
| 7 | abzubildender Punkt P7 (P7x, P7y) |
| 8 | erster Brennpunkt der Optik 11 |
| 9 | zweiter Brennpunkt der Optik 11 |
| 10 | Vorlage |
| 11 | Optik |
| 12 | Spiegel |
| 13 | Zeilensensor |
| 14 | erster Arm |
| 15 | zweiter Arm |
| 16 | Optikträger |
| 17 | erste Hauptebene der Optik 11 |
| 18 | zweite Hauptebene der Optik 11 |
| 19,20 | seitliche Begrenzungen des wirksamen Lichtbündels |
| 21 | Länge L1 des ersten Arms 14 |
| 22 | Länge L2 des zweiten Arms 15 |
| 23 | Länge L3 des Optikträgers 16 |
| 24 | v-förmige Bahn |
| 25 | optische Achse |
| 28 | Gelenkviereck |
| 29 | X-Achse des Koordinatensystems |
| 30 | Y-Achse des Koordinatensystems |
| 31 | Abstand L5 |
| 33 | Bezugsmaß L0 |
| 34 | Gehäuse |
| 35 | Lagerstift |
| 36 | optische Achse der Beleuchtung |
| 37,38 | Beleuchtungsspiegel |
| 39 | seitliche Begrenzungen des Lichtbündels der Beleuchtung |

**Patentansprüche**

1. Vorrichtung zur zeilenweisen optischen Abtastung einer ebenen Vorlage (10) mit Abbildung der gesamten Zeilenlänge einer Zeile der Vorlage (10) auf einen Sensor (13) durch eine auf einem Optikträger (16) befestigte Optik (11) und/oder einen auf dem Optikträger (16) befestigen Spiegel (12), wobei ein Punkt (6) der optischen Achse als Bezugspunkt zwischen Zeile und Zeilensensor (13) auf einer v-förmigen Bahn (24) bewegt wird, **dadurch gekennzeichnet, daß** der Optikträger (16) zwischen zwei Punkten (3, 4) angeordnet ist, die jeweils auf gekrümmten Bahnen laufen.

2. Vorrichtung nach Anspruch 1, **dadurch gekennzeichnet, daß** der Optikträger (16) als mittlerer Arm eines symmetrischen Gelenkvierecks (1; 2; 3; 4) ausgebildet ist.

3. Vorrichtung nach Anspruch 1 oder 2, **dadurch gekennzeichnet, daß** zwei Gelenkpunkte (1; 2) des Gelenkvierecks (1; 2; 3; 4) zur Vorlage (10) parallel positioniert sind und daß der Abstand L3 zwischen den Gelenkpunkten (3; 4) des Optikträgers (16) nach folgendem Schema dimensioniert ist, wobei L0 der maximale Abstand zwischen den Gelenkpunkten (3; 4) und der Vorlage (10), und L die Länge der beweglichen Seiten (14; 15) des Gelenkvierecks (1; 2; 3; 4) ist, mit P2x als x-Koordinate des Punktes P2:

   a)

$$Xx = P2x/L0$$

   b)

$$Vxx = 0.66585 - 4.2054 \cdot Xx + 5.6624 \cdot Xx^2 - 3.8695 \cdot Xx^3$$

c)

$$Vy = 0.19421 -0.95048*Xx + 0.02057*Xx^2 +0.3072*Xx^3$$

d)

$$V = 0.9264 +0.87303*Xx -2.6595*Xx^2 +0.811 *Xx^3$$

e)

$$L1m = (L1/L0 + Vxx) * V$$

f) In der durch die Punkte
   (-0.1625 , 0.3)
   (-0.13125 , 0.46458)
   (0.01146 , 0.25625)
   (1.0 , 0.2151)
   bestimmten Bezierkurve der zwei Dimensionen L1m, L3m wird der zu L1m gehörende Wert L3m ermittelt.
g)

$$L3 = L0*(L3m - Vy)$$

4. Vorrichtung nach mindestens einem der Ansprüche 1 - 3, **dadurch gekennzeichnet, daß** an dem Optikträger (16) eine Beleuchtungseinrichtung zur Beleuchtung der jeweils abzutastenden Zeile der Vorlage (10) angeordnet ist.

5. Vorrichtung nach Anspruch 4, **dadurch gekennzeichnet, daß** die Beleuchtung durch die Optik (11) mit gegen deren optische Achse geneigter oder verschobener optischer Achse erfolgt und ein durch die Beleuchtungseinrichtung erzeugter Lichtbalken durch einen oder mehrere Spiegel (37, 38) auf die zu beleuchtende Zeile der Vorlage (10) reflektiert wird.

6. Vorrichtung nach Anspruch 5, **dadurch gekennzeichnet, daß** mindestens ein Spiegel (37 und/oder 38) gekrümmt ist.

7. Vorrichtung nach Anspruch 5 oder 6, **dadurch gekennzeichnet, daß** zwei Spiegelflächen zu einem gemeinsamen Spiegel zusammengefaßt sind.

8. Vorrichtung nach mindestens einem der Ansprüche 1 - 7, **dadurch gekennzeichnet, daß** der Sensor (13) eine Sensortrommel ist, deren Achse in dem Optikträger (16) fest angeordnet ist.

9. Vorrichtung nach mindestens einem der Ansprüche 1 - 8, **dadurch gekennzeichnet, daß** ein von einer abzutastenden Zeile ausgehendes Lichtbündel nach Durchtritt durch die Optik (11) durch einen Spiegel oder ein Prisma abgelenkt wird und die Oberfläche des Zeilensensors (13) bezüglich einer auf der optischen Achse senkrecht stehenden Ebene geneigt ist, vorzugsweise senkrecht zur Vorlage (10) verläuft.

10. Vorrichtung nach mindestens einem der Ansprüche 1 - 9, **dadurch gekennzeichnet, daß** die Optik (11) in ihrer lichten Weite parallel zur abzubildenden Zeile weiter ist als senkrecht dazu.

**Claims**

1. Apparatus for scanning a flat original (10) optically line by line with imaging of the entire line length of a line of the original (10) on to a sensor (13) by means of an optical system (11) fixed to an optical system carrier (16) and/or a mirror (12) fixed to the optical system carrier (16), a point (6) of the optical axis being moved on a v-shaped path (24) between line and line sensor (13) as a reference point, **characterized in that** the optical system carrier (16) is arranged between two points (3, 4) which each run on curved paths.

2. Apparatus according to Claim 1, **characterized in that** the optical system carrier (16) is formed as a central arm of a symmetrical four-bar linkage (1; 2; 3; 4).

3. Apparatus according to Claim 1 or 2, **characterized in that** two points of articulation (1; 2) of the four-bar linkage (1; 2; 3; 4) are positioned parallel to the original (10) and **in that** the distance L3 between the points of articulation (3; 4) of the optical carrier system (16) is dimensioned in accordance with the following scheme, where L0 is the maximum distance between the points of articulation (3; 4) and the original (10); and L1 is the length of the movable sides (14; 15) of the four-bar linkage (1; 2; 3; 4), with P2x as the x-coordinate of the point P2:

a)

$$Xx = P2x/L0$$

b)

$$Vxx = 0.66585 -4.2054*Xx +5.6624*Xx^2 -3.8695*Xx^3$$

c)

$$Vy = 0.19421 -0.95048*Xx +0.02057*Xx^2 +0.3072*Xx^3$$

d)

$$V = 0.9264 +0.87303*Xx -2.6595*Xx^2 +0.811*Xx^3$$

e)

$$L1m = (L1/L0 + Vxx)*V$$

f) the value L3m associated with L1m is determined in the Bézier curve of the two dimensions L1m, L3m determined by the points
  (-0.1625, 0.3)
  (-0.13125, 0.46458)
  (0.01146, 0.25625)
  (1.0, 0.2151)
g)

$$L3 = L0*(L3m - Vy).$$

4. Apparatus according to at least one of Claims 1-3, **characterized in that** an illumination device is arranged on the optical system carrier (16) in order to illuminate the line of the original (10) respectively to be scanned.

5. Apparatus according to Claim 4, **characterized in that** the illumination by the optical system (11) is carried out with an optical axis which is inclined or displaced with respect to its optical axis, and a light beam produced by the illumination device is reflected by one or more mirrors (37, 38) onto the line of the original (10) to be illuminated.

6. Apparatus according to Claim 5, **characterized in that** at least one mirror (37 and/or 38) is curved.

7. Apparatus according to Claim 5 or 6, **characterized in that** two mirror surfaces are combined to form a common mirror.

8. Apparatus according to at least one of Claims 1-7, **characterized in that** the sensor (13) is a sensor drum whose axis is arranged in a fixed manner in the optical system carrier (16).

9. Apparatus according to at least one of Claims 1-8, **characterized in that** a bundle of light leaving a line to be scanned, after passing through the optical system (11), is deflected by a mirror or a prism, and the surface of the line sensor (13) is inclined with respect to a plane perpendicular to the optical axis, preferably running at right angles to the original (10).

10. Apparatus according to at least one of Claims 1-9, **characterized in that**, in terms of its internal width, the optical system (11) is wider parallel to the line to be imaged than at right angles thereto.

**Revendications**

1. Dispositif pour le balayage optique ligne par ligne d'un motif (10) plan avec la reproduction d'une longueur de ligne entière du motif (10) sur un détecteur (13) par un système optique (11) fixé sur un support de système optique (16) et/ou sur un miroir (12) fixé sur ce support (16), dans lequel on fait bouger un point (6) de l'axe optique en tant que point de référence entre la ligne et le détecteur de lignes (13) sur un parcours en forme de V, **caractérisé en ce que** le support de système optique (16) est disposé entre deux points (3, 4) qui suivent chacun des parcours courbe.

2. Dispositif selon la revendication 1, **caractérisé en ce que** le support de système optique (16) se présente sous la forme d'un bras central d'un quadrilatère symétrique articulé (1 ; 2 ; 3 ; 4).

3. Dispositif selon la revendication 1 ou 2, **caractérisé en ce que** deux points d'articulation (1 ; 2) du quadrilatère articulé (1 ; 2 ; 3 ; 4) sont positionnés parallèlement au motif (10) et **en ce que** la distance L3 entre les points d'articulation (3 ; 4) du support de système optique (16) est dimensionné selon le schéma suivant, dans lequel L0 est la distance maximale entre les points d'articulation (3 ; 4) et le motif (10), et L1 est la longueur des côtés mobiles (14 ; 15) du quadrilatère articulé (1 ; 2 ; 3 ; 4), P2x étant la valeur x sur l'abscisse du point P2 :

a)

$$Xx = P2x/L0$$

b)

$$Vxx = 0,66585 -4,2054*Xx + 5,6624*Xx^2 -3,8695*Xx^3$$

c)

$$Vy = 0,19421 -0,95048*Xx + 0,02057*Xx^2 +0,3072*Xx^3$$

d)

$$V = 0,9264 +0,87303*Xx - 2,6595*Xx^2 +0,811*Xx^3$$

e)

$$L1m = (L1/L0 + Vxx)*V$$

f) A l'aide des points
(-0,1625, 0,3)
(-0,13125, 0,46458)

(0,01146, 0,25625)
(1,0, 0,2151),
caractérisant la courbe de Bézier à deux dimensions L1m, L3m, on détermine la valeur L3m correspondant à L1m.
g)

$$L3 = L0*(L3m - Vy)$$

**4.** Dispositif selon au moins l'une des revendications 1 à 3, **caractérisé en ce qu'**un dispositif d'éclairage est disposé sur le support de système optique (16) afin d'éclairer chacune des lignes à balayer du motif (10).

**5.** Dispositif selon la revendication 4, **caractérisé en ce que** l'éclairage a lieu à travers le système optique (11) avec un axe optique incliné ou décalé par rapport à son axe optique et une barre lumineuse produite par le dispositif d'éclairage est réfléchie par un ou plusieurs miroirs (37, 38) sur les lignes à éclairer du motif (10).

**6.** Dispositif selon la revendication 5, **caractérisé en ce qu'**au moins un miroir (37 et/ou 38) est courbe.

**7.** Dispositif selon la revendication 5 ou 6, **caractérisé en ce que** deux surfaces de miroir sont réunies en un miroir commun.

**8.** Dispositif selon au moins une l'une des revendications 1 à 7, **caractérisé en ce que** le détecteur (13) est un cylindre détecteur dont l'axe est disposé de manière fixe dans le support de système optique (16).

**9.** Dispositif selon au moins l'une des revendications 1 à 8, **caractérisé en ce qu'**un faisceau lumineux partant d'une ligne à balayer est dévié par un miroir ou un prisme après avoir traversé le système optique (11) et la surface du détecteur de lignes (13) est inclinée par rapport à un plan perpendiculaire à l'axe optique, de préférence perpendiculaire au motif (10).

**10.** Dispositif selon au moins l'une des revendications 1 à 9, **caractérisé en ce que** la largeur d'ouverture du système optique (11) parallèle à la ligne à reproduire, est plus grande que celle dans le sens perpendiculaire à celle-ci.

EP 1 101 351 B1

Figur 1

16

# Figur 2

Y

24

30

# Figur 3

Y

7

5

Y-Koordinaten
10-fach überhöht
dargestellt

0

X

# Figur 4

20

10

11

9

12

8

19

13

Figur 5

## Figur 6

## Figur 7

## Figur 8

Figur 9

Figur 10